# EUROPÄISCHE PATENTANMELDUNG

(11) **EP 2 258 971 A1**
(43) Veröffentlichungstag der Anmeldung: **08.12.2010**
(21) Anmeldenummer: 09007371.9
(22) Anmeldetag: 04.06.2009
(51) Int. Cl.: F16K 35/02

(54) **Drehmomentstütze für eine Verriegelung**

(71) Anmelder: Haake, André, 48703 Stadtlohn (DE); Haake, Patrick, 48691 Vreden (DE); Haake, Oliver, 48703 Stadtlohn (DE)
(72) Erfinder: Haake, André, 48703 Stadtlohn (DE); Haake, Patrick, 48691 Vreden (DE); Haake, Oliver, 48703 Stadtlohn (DE)
(74) Vertreter: Habbel, Hans-Georg

(57) **Zusammenfassung**

Drehmomentstütze für eine Ventilverriegelung (5), um eine Drehung der Verriegelung gegenüber dem Ventil zu verhindern, wobei ein Anschlussgehäuse (8) an die Ventilverriegelung (5) anschließt und wenigstens ein vom Anschlussgehäuse (8) getragener Ausleger (9) sich in der ausgeschwenkten Endlage an das Ventilgehäuse (1) anlegt. In gleicher Weise kann die Drehmomentstütze auch an das Ventilgehäuse (1) angeschlossen werden und der Ausleger (9) sich an das Anschlussgehäuse (8) anlegen.

## Beschreibung

Die Erfindung bezieht sich auf eine Drehmomentstütze für eine Ventilverriegelung, um eine Drehung der Verriegelung gegenüber dem Ventil zu verhindern.

Ventilverriegelungssysteme haben die Aufgabe, zu verhindern, dass das Ventil unbefugt betätigt werden kann, so dass eine unbefugte Veränderung des Zustandes des Ventiles ausgeschlossen ist.

Diese Verriegelungssysteme werden daher als gesondertes Bauteil zwischen das Ventil und die Ventilbetätigung eingeschaltet, wobei dieses gesonderte Bauteil im wesentlichen die Verbindungsmittel zwischen dem Ventilbetätigungsrad und der Ventilspindel besitzt.

Ventilverriegelungssysteme für handbetätigte Ventile werden in Anpassung an die unterschiedlichsten im Einsatz befindlichen Spindelformen in verschiedenen Ausführungen benötigt. Der Regelfall ist der, dass bei diesen Verriegelungssystemen die Endlage eingestellt werden kann. Häufig werden für die Endlage die Positionen "Ventil ganz geöffnet" und "Ventil ganz geschlossen" gewählt, wobei aber auch andere Ventilpositionen möglich sind.

Die Verbindung zwischen der Ventilspindel und dem eigentlichen Schloss des Verriegelungssystems erfolgt dabei über eine Hohlwelle, die an ihrer Aussenseite Zähne für eine Sperrklinke und in ihren Endbereichen Aufnahmen für Adapter aufweist, die dem Anschluss der Spindel einerseits und des Handrades oder Betätigungshebels andererseits dienen.

Ventilverriegelungssysteme werden überall dort eingesetzt, wo eine Ablauffolge für Ventile zur Erhöhung der Personen- und Anlagensicherheit beitragen. Häufig sind das Ölbohrinseln, Chemie- und Raffineriewerke, die Gasindustrie sowie die Anlagen der Kernenergie.

Drehmomentstützen, die mit einer Ventilverriegelung kombiniert sind, haben die Aufgabe, die Verriegelung am Ventil abzustützen. Im verriegelten Zustand muss die Drehmomentstütze bei unerlaubtem Betätigungsversuch des Ventils das Drehmoment abfangen, so dass nicht die ganze Verriegelung auf dem Ventil gedreht werden kann.

Bekannt geworden ist dabei z. B. aus der EP 0 942 215 B1 eine Anordnung, bei der ein robuster schwerer Steg vorgesehen wird und zwei Bügel, welche wie eine Klammer das Ventil umgreifen. Diese Version ist aufwendig zu installieren und zerstört das Design der Verriegelung an sich.

Aus der WO 2009/026 905 A1 ist eine Anordnung bekannt geworden, bei der ein Adapterring zum Anschluss der Drehmomentstütze an die Ventilverriegelung und zwei innerhalb des Adapterringes angeordnete Riegelringe, die je eine sich nach unten erstreckende Widerlagerscheibe tragen, vorgesehen sind. Die Widerlagerscheiben erstrecken sich nur über einen Teil des Umfanges der Riegelringe und es sind eine Vielzahl von Arretierschrauben zur drehfesten Befestigung der Riegelringe in dem Adapterring notwendig und vorgesehen. Diese Anordnung ist individuell an jede Ventilausführung angepasst und kann daher nicht vorgefertigt hergestellt werden und benötigt zum Einbau eine Vielzahl von Bauteilen mit Schrauben, Werkzeugen u. dgl.

Der Erfindung liegt die Aufgabe zugrunde, eine Drehmomentstütze vorzuschlagen, die ohne zusätzliche Bauteile bereitgestellt werden kann und vor allen Dingen universeller einsetzbar ist, d. h. an unterschiedliche Ventiltypen angeschlossen werden kann. So werden geringere Montagekosten und eine preiswertere Herstellung ermöglicht.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird ein Anschlussgehäuse vorgeschlagen, dass an die Ventilverriegelung anschließt und das wenigstens einen Ausleger schwenkbar aufweist, der am Anschlussgehäuse schwenkbar festgelegt gegen das Ventilgehäuse geklappt werden kann.

In gleicher Weise ist es aber auch möglich, dass das Anschlussgehäuse an das Ventilgehäuse angeschlossen wird und der Ausleger sich im Einsatzfall an die Ventilverriegelung anlegt.

Vorzugsweise ist gemäß der Erfindung vorgesehen, dass der oder die Ausleger hinsichtlich ihrer Schwenkbewegung unter Vorspannung an das Anschlussgehäuse anschließen, wobei im Einsatzfall die Schwenkbewegung des oder der Ausleger nur in einer Richtung ermöglicht wird durch Einbau einer Sperreinrichtung in das Anschlussgehäuse.

Hierbei kann die Sperreinrichtung durch federbeaufschlagte Rasterscheiben gebildet werden, die als Zahnscheiben ausgebildet sind und einerseits von dem Ausleger und andererseits von einem Druckkörper getragen werden oder aber die Sperreinrichtung wird durch eine Sperrklinke gebildet, die die Bewegung in einer Richtung ermöglicht, in der entgegengesetzten Richtung aber sperrt.

Der oder die Ausleger tragen endständig Distanzelemente, die kleine Durchmesserunterschiede des Ventilgehäuses ausgleichen können. Diese Distanzelemente können aufschiebbar auf die Ausleger sein oder aber die Distanzelemente können auch exzentrisch am Ende der Ausleger gelagert sein und dadurch also gewisse Abstandsdifferenzen überbrücken.

Der Ausleger selbst kann einteilig oder mehrteilig ausgebildet sein.

Außerdem besteht die Möglichkeit, dass die Ausleger Spannbänder tragen, so dass sie im angelegten Zustand durch Spannbänder zusätzlich festgelegt werden können.

Die Sperreinrichtung ist vorzugsweise im Anschlussgehäuse vorgesehen und hier manipulierbar sicher untergebracht, d. h. Zugang zur Sperreinrichtung ist nur unter Einsatz von bestimmten codierten Schlüsseln möglich.

Ausführungsbeispiele der Erfindung werden nachfolgend anhand der Zeichnungen erläutert. Die Zeichnungen zeigen dabei in
- Fig. 1: eine Ventilanordnung mit angebautem An- schlussgehäuse und angelegten Auslegern, in
- Fig. 2: in größerem Maßstab die Lagerung des Aus- legers im Anschlussgehäuse und in
- Fig. 3: eine abgeänderte Ausführungsform der Sperreinrichtung.

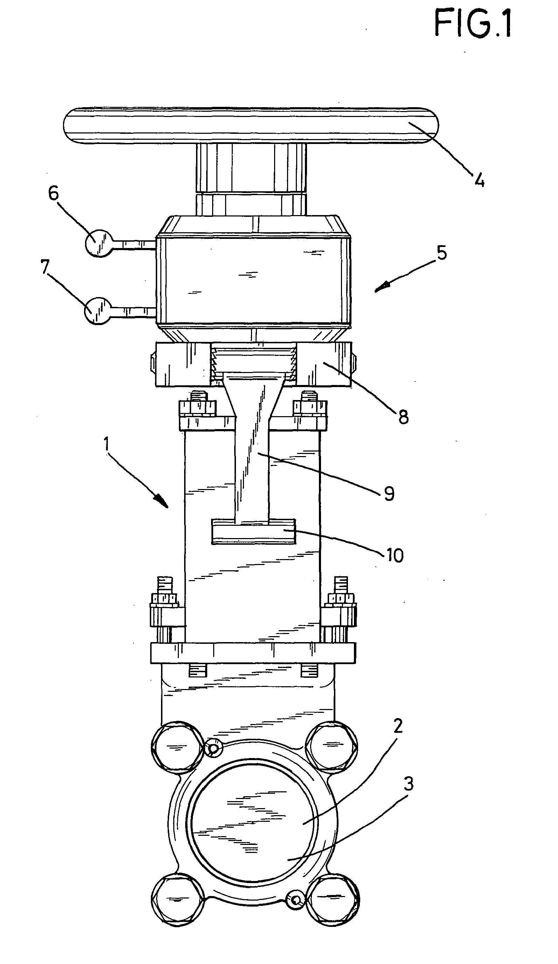

In Fig. 1 ist ein Ventilgehäuse 1 dargestellt, das in eine Rohrleitung 2 eingeschaltet ist, wobei in der Zeichnung der Ventilschieber 3 erkennbar ist, der die Rohrleitung verschließt. Dieser Schieber 3 wird über eine in der Zeichnung nicht erkennbare Getriebeanordnung mit einem Handrad 4 verbunden, über welches der Ventilschieber betätigt werden kann. Zwischengeschaltet ist eine Ventilverriegelung 5, die in an sich bekannter Weise über die Schlüssel 6 und 7 die Betätigung des eigentlichen Ventils ermöglicht oder verhindert.

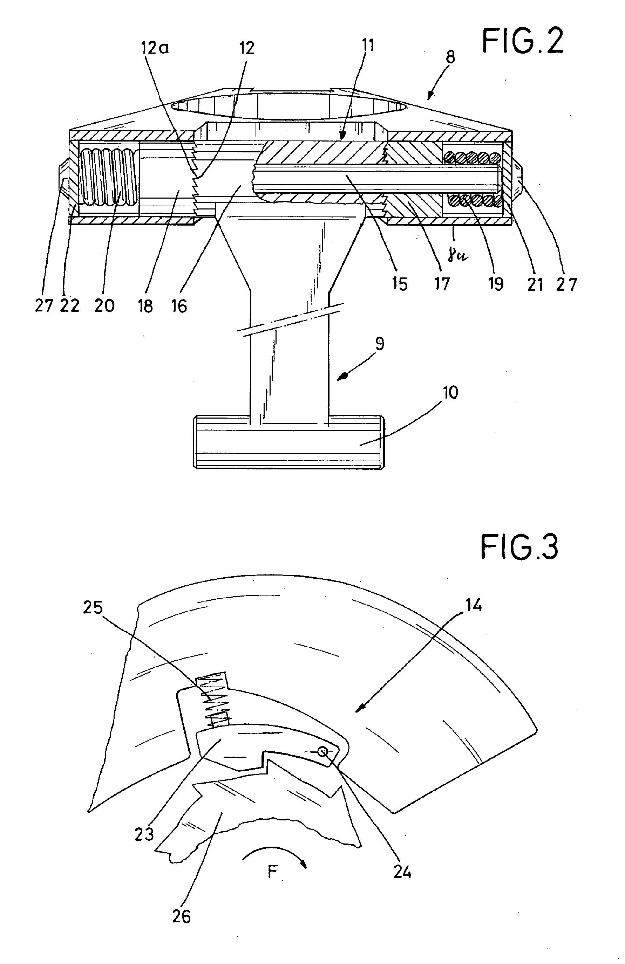

An die Ventilverriegelung 5 schließt ein Anschlussgehäuse 8 an, das gemäß der Zeichnung in Fig. 1 einen Ausleger 9 trägt, der schwenkbar am Anschlussgehäuse 8 angeordnet ist und sich unter Zwischenschaltung eines Distanzelementes 10 an die Wandung des Ventilgehäuses 1 anlegen kann. Selbstverständlich kann auf der Rückseite des in Fig. 1 dargestellten eigentlichen Ventils ein gleicher Ausleger 9 vorgesehen sein. Die Lagerung des oder der Ausleger 9 im Anschlussgehäuse 8 geht deutlicher aus Fig. 2 hervor.

In Fig. 2 ist ein Anschlussgehäuseteil 8a dargestellt, das eine Welle 15 aufnimmt, die ein Lagerteil 16 des Auslegers 9 durchquert. Die Wandbereiche des Lagerteiles 16 des Auslegers 9 sind dabei mit einer Zahnung 12 versehen, die mit der Zahnung 12a von Druckkörpern 17 und 18 zusammen arbeiten, die ebenfalls auf der Welle 15 in Axialrichtung der Welle verschieblich angeordnet sind. Die Druckkörper 17 und 18 werden an die Zahnung 12 des Lagerteiles 16 durch Federn 19 und 20 angedrückt, die sich anderenendes an der Innenseite von Verschlusskappen 21 und 22 abstützen, die die im Anschlussgehäuseteil 8a gesehene Öffnung verschließen. Diese Verschlusskappen 21 und 22 sind manipuliersicher am Anschlussgehäuseteil 8a festgelegt, so dass ein ungewolltes Beeinflussen der die Schwenkbewegung nur in einer Richtung ermöglichenden Einrichtung von Unbefugten nicht möglich ist.

Durch die vorbeschriebene Einrichtung ist eine Schwenkbewegung der Ausleger oder des Auslegers 9 nur in einer Richtung möglich, die auf das Ventilgehäuse 1 zu gerichtet ist, während eine Schwenkbewegung in entgegengesetzter Richtung durch die Verzahnungen 12 und 12a verhindert wird. Außerdem bewirken die Verzahnungen 12 und 12a, d. h. also diese Zahnscheiben, dass der Ausleger 9 mit einer gewissen Vorspannung an das Ventilgehäuse angelegt wird. Sollten hier gewisse Distanzen entstehen, wird darauf hingewiesen, dass die Distanzelemente 10 dieses ausgleichen können, insbesondere dann, wenn sie exzentrisch gelagert sind.

In Fig. 3 ist eine Sperrklinkenanordnung 14 dargestellt, bei der eine Sperrklinke 23 schwenkbar bei 24 gelagert ist und gegen die Wirkung einer Rückstellfeder 25 abgehoben werden kann. Diese Sperrklinke 23 arbeitet mit einem Zahnrad 26 zusammen, das eine entsprechende Anlagefläche für die Sperrklinke aufweist. Bei Bewegung des Zahnrades 26 in Richtung des Pfeiles F kann der Zahn des Zahnrades an der Schrägfläche der Sperrklinke 23 aufgleiten und die Sperrklinke gegen die Wirkung der Feder 25 abheben, während bei einer Rückwärtsbewegung, d. h. also einer Bewegung entgegen der Pfeilrichtung F, der Zahn des Zahnrades 26 sich an einen entsprechenden Vorsprung der Sperrklinke anlegt und eine Rückbewegung verhindert.

Die erfindungsgemäße Drehmomentstütze kann ohne zusätzliche Bauteile, wie Schrauben, Stifte od. dgl. und ohne besonderes Werkzeug bereitgestellt werden. Die Drehmomentstütze gemäß der Erfindung stellt eine kostengünstigere Lösung dar als die individuell angepassten Drehmomentstützen im Stand der Technik. Durch die Ausbildung der erfindungsgemäßen Drehmomentstütze ist diese individuell an die unterschiedlichsten Ventilgrößen und -formen anpassbar.

Die erfindungsgemäße Drehmomentstütze verursacht geringere Montagekosten, eine preiswertere Herstellung und ist je nach Ausführung sehr stabil.

Während in der voraufgehenden Beschreibung ein einteiliger Ausleger erläutert wird, kann dieser selbstverständlich auch mehrteilig ausgebildet sein, um damit auch eine individuellere Anpassung an unterschiedliche Ventilformen zu ermöglichen.

## Patentansprüche

1. Drehmomentstütze für eine Ventilverriegelung, um eine Drehung der Verriegelung gegenüber dem Ventil zu verhindern, **gekennzeichnet durch**
a) ein Anschlussgehäuse (8), das an der Ventilverriegelung (5) oder an dem Ventilgehäuse (1) festlegbar ist,
b) wenigstens ein vom Anschlussgehäus (8) schwenkbar getragener Ausleger (9), der sich in der ausgeschwenkten Endlage an das Ventilgehäuse (1) oder die Ventilverriegelung (5) anlegt.

2. Drehmomentstütze nach Anspruch 1,
**dadurch gekennzeichnet,**
**dass** der oder die Ausleger (9) hinsichtlich ihrer Schwenkbewegung unter Vorspannung an das Anschlussgehäuse (8) anschließen.

3. Drehmomentstütze nach Anspruch 1 oder 2,
**gekennzeichnet durch** eine die Schwenkbewegung des oder der Ausleger (9) im Einsatzfall nur in einer Richtung ermöglichende Sperreinrichtung (11).

4. Drehmomentstütze nach Anspruch 3,
**dadurch gekennzeichnet,**
**dass** die Sperreinrichtung (11) federbeaufschlagte Rasterscheiben mit Zahnungen (12, 12a) aufweist.

5. Drehmomentstütze nach Anspruch 3,
**dadurch gekennzeichnet,**
**dass** die Sperreinrichtung (11) durch eine Sperrklinkenanordnung (14) gebildet ist.

6. Drehmomentstütze nach Anspruch 3 - 5,
**dadurch gekennzeichnet,**
**dass** die Sperreinrichtung (11) im Anschlussgehäuse (8) angeordnet ist.

7. Drehmomentstütze nach Anspruch 6,
**dadurch gekennzeichnet,**
**dass** die Sperreinrichtung (11) im Anschlussgehäuse (8) manipuliersicher mit Verschlussmittel (27) angeordnet ist.

8. Drehmomentstütze nach einem oder mehreren der vorhergehenden Ansprüche,
**dadurch gekennzeichnet,**
**dass** der oder die Ausleger (9) endständig Distanzelemente (10) tragen.

9. Drehmomentstütze nach Anspruch 8,
**dadurch gekennzeichnet,**
**dass** die Distanzelemente (10) aufschiebbar sind.

10. Drehmomentstütze nach Anspruch 8,
**dadurch gekennzeichnet,**
**dass** die Distanzelemente (10) exzentrisch am Ende der Ausleger (9) gelagert sind.

11. Drehmomentstütze nach einem oder mehreren der Ansprüche 1 - 10,
**dadurch gekennzeichnet, dass** der oder die Ausleger (9) einteilig ausgebildet sind.

12. Drehmomentstütze nach einem oder mehreren der vorhergehenden Ansprüche 1 - 10,
**dadurch gekennzeichnet, dass** der oder die Ausleger (9) mehr teilig ausgebildet sind.

13. Drehmomentstütze nach einem oder mehreren der vorhergehenden Ansprüche,
**dadurch gekennzeichnet, dass** die Ausleger (9) Spannbänder tragen.
